# EUROPÄISCHE PATENTSCHRIFT

(11) **EP 3 221 194 B1**
(45) Veröffentlichungstag und Bekanntmachung des Hinweises auf die Patenterteilung: **07.04.2021**
(21) Anmeldenummer: 15794186.5
(22) Anmeldetag: 13.11.2015
(51) Int. Cl.: B60T 8/172

(54) **BREMSEINRICHTUNG UND VERFAHREN ZUM GLEICHMÄSSIGEN ABBREMSEN**
BRAKING DEVICE AND METHOD FOR EVEN BRAKING
DISPOSITIF DE FREINAGE ET PROCÉDÉ DE FREINAGE RÉGULIER

(30) Priorität: 17.11.2014 DE 102014116803
(43) Veröffentlichungstag der Anmeldung: 27.09.2017
(73) Patentinhaber: KNORR-BREMSE Systeme für Schienenfahrzeuge GmbH, 80809 München (DE)
(72) Erfinder: SCHUBERT, Michael, 80335 München (DE); FRIESEN, Ulf, 85579 Neubiberg (DE); HERDEN, Marc-Oliver, München 81377 (DE); SZEKELY, Ferenc, H-2381 Táborfalva (HU); KREMER, Miklos, H-1215 Budapest (HU)
(86) Internationale Anmeldenummer: PCT/EP2015/076509
(87) Internationale Veröffentlichungsnummer: WO 2016/079014

(56) Entgegenhaltungen:
- EP-A1- 2 471 764
- GB-A- 2 212 572
- JP-A- 2007 191 010
- US-A1- 2011 029 213

## Beschreibung

Die vorliegende Erfindung betrifft eine Bremseinrichtung eines Schienenfahrzeugs, umfassend einen Bremsaktuator und einen dadurch bewegbaren Bremsbelag sowie eine damit zusammenwirkende Bremsscheibe, die drehfest mit einem Rad verbunden ist, zur Erzeugung einer das Schienenfahrzeug verlangsamenden Bremskraft auf eine Bremsanforderung einer elektronischen Steuereinheit hin, wobei die Bremskraft in Abhängigkeit von der, durch Anpressen des Bremsbelags auf die Bremsscheibe erzeugten, Normalkraft und von einem, von Relativgeschwindigkeit, Material und Temperatur des Bremsbelags und der Bremsscheibe abhängigen, Reibwert entsteht.

Ferner betrifft die Erfindung auch ein Verfahren zur Bereitstellung einer erfindungsgemäßen Bremseinrichtung sowie ein Verfahren zu deren Betrieb.

Das Einsatzgebiet der Erfindung erstreckt sich auf Schienenfahrzeuge, bei denen Bremsungen durchgeführt werden, indem ein Aktuator einen Bremsbelag gegen eine, beispielsweise an einem Rad oder an der Achse des Rades befestigte, Bremsscheibe drückt. Der Aktuator bewirkt also unmittelbar eine Normalkraft, also eine senkrecht auf der Oberfläche der Bremsscheibe stehende Kraft, welche allerdings durch die Reibung zwischen Bremsbelag und Bremsscheibe in eine Bremskraft umgeformt wird. Zwischen Normalkraft und Bremskraft vermittelt dabei der sogenannte Reibwert. Ein höherer Reibwert resultiert dabei in einer höheren Bremskraft.

Es ist wünschenswert, möglichst genaue Vorhersagen über das Bremsverhalten eines Schienenfahrzeuges machen zu können, bzw. die Bremsung eines Schienenfahrzeuges möglichst kontrolliert ablaufen zu lassen. Insbesondere existieren Regularien, die beispielsweise die maximale Bremsbeschleunigung beispielsweise von Personenverkehrszügen festlegen. Da das Mittel, das zur Bremsung angesteuert wird, der Bremsbelag ist, und insbesondere die Normalkraft des Bremsbelages auf der Bremsscheibe vorgegeben wird, ist es wünschenswert, Aussagen über den Reibwert einer aus Bremsbelag und Bremsscheibe bestehenden Bremse zu machen.

Zur Bremsung eines Schienenfahrzeugs wird im allgemein bekannten Stand der Technik ein Steuerdruck durch einen Zugführer vorgegeben und über eine Betätigungseinrichtung eingesteuert, um einen Bremsvorgang auszulösen. Dadurch wird durch einen beispielsweise pneumatisch oder hydraulisch oder elektromechanisch angetriebenen Aktuator eine Normalkraft erzeugt, durch die ein Bremsbelag auf eine drehfest mit einem Rad verbundene Bremsscheibe gedrückt wird. Über einen Reibwert vermittelt entsteht eine Bremskraft, die bremsend auf dieses Rad wirkt. Die letztendliche Bremskraft ist außerdem abhängig von einem Quotienten der Bremsscheibengröße über der Radgröße. Insbesondere wird in Modellen, die bei üblichen Bremseinrichtungen im Stand der Technik angewendet werden, von einem zeitlich konstanten Reibwert ausgegangen. Dieser beträgt typischerweise beispielsweise zwischen 0,3 und 0,4.

Aus der WO 2010/069520 A2 geht eine Bremsanlage eines Schienenfahrzeuges hervor, bei der zur Ansteuerung eines gleichmäßigen Bremsvorganges diverse Messungen durch zusätzliche Sensorik an dem Rad oder Radsatz des Schienenfahrzeuges durchgeführt werden. Nachteilhaft hieran ist vor allem die zusätzliche Sensorik die an einem solchen Zug angebracht und ausgewertet werden muss.

Aus der WO 2013/034693 A2 geht eine Steuereinrichtung für eine Bremsanlage eines Schienenfahrzeuges hervor, bei der unter anderem Bremskraftsensoren zur Kontrolle des Bremsvorganges eingesetzt werden. Nachteilhaft hieran ist die nahe an rotierenden Teilen und auch am Gleisbett befindliche zusätzliche Sensorik, sowie andere Umwelteinflüsse wie beispielsweise nicht berücksichtigte Temperatureinwirkung der Bremsscheibe oder der Räder

Dokument US2011/0029213 A1 offenbart eine Bremseinrichtung gemäß dem Oberbegriff des Anspruchs 1.

Es ist die Aufgabe der vorliegenden Erfindung, eine Bremseinrichtung eines Schienenfahrzeuges zu schaffen, die einen gleichmäßigen Bremskraftverlauf mit minimalem sensorischen Aufwand ermöglicht.

Die Aufgabe wird ausgehend von einer Bremseinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder. Zwei die Erfindung betreffende Verfahren werden in Ansprüchen 9 und 10 vorgestellt.

Die Erfindung schließt die technische Lehre ein, dass in der Steuereinheit mindestens ein Bremsparameterverlauf hinterlegt ist, der auf einem Reibwertverlauf basiert, der bei einer Abbremsung von einer Ausgangsgeschwindigkeit auf eine Zielgeschwindigkeit bei konstanter Normalkraft und einer Kombination von Prüfstandparametern entsteht, und dass die Steuereinheit über eine Recheneinheit verfügt, welche auf eine Bremsanforderung hin den einen Normalkraftverlauf gemäß dem mindestens einen Bremsparameterverlauf zeitlich moduliert, um einen Soll-Bremskraftverlauf zu erzeugen.

In einem bevorzugten Spezialfall ist die Zielgeschwindigkeit dabei gleich Null. Dies entspricht dem häufig auftretenden Fall einer Vollbremsung oder einer Schnellbremsung.

Der Vorteil der erfindungsgemäßen Bremseinrichtung besteht insbesondere darin, dass die Modulation der Normalkraft nicht anhand zeitgleich beziehungsweise während der Fahrt gewonnener sensorisch erfasster Daten durchgeführt wird, sondern in erster Linie anhand von zuvor definierten, beispielsweise in einem Prüfstand, wie einem Schwungmassenprüfstand, aufgenommenen, Reibwertverläufen. Beispielsweise kann zuvor in einem Prüfstand der Verlauf des Reibwertes von Bremsbelag und Bremsscheibe eines dem Schienenfahrzeug entsprechenden Modells aufgenommen worden sein, und dieser Reibwertverlauf in der Steuereinheit hinterlegt worden sein. Dann ist es im Betrieb, also außerhalb des Prüfstandes, möglich, Schwankungen des Reibwertes, die beispielsweise durch Erwärmung von Bremsbelag oder Bremsscheibe oder sonstige Effekte entstehen, durch beispielsweise entgegengesetzte Modulation der Normalkraft des den Bremsbelag betätigten Aktuators auszugleichen. Gemäß einer die Erfindung verbessernden Maßnahme entspricht der auf dem Reibwertverlauf basierende Bremsparameterverlauf dem errechneten Verlauf der Normalkraft, die durch den Aktuator bewirkt werden muss, um den gewünschten Soll-Bremskraftverlauf zu erzeugen. Alternativ, und ebenfalls bevorzugt, ist es auch möglich, dass auf der Steuereinheit stattdessen der Reibwertverlauf selbst hinterlegt wird, so dass die elektronische Recheneinheit der Steuereinheit im Betrieb die notwendige Normalkraft anhand des hinterlegten Reibwertverlaufes errechnen oder abschätzen kann.

Gemäß einer vorteilhaften Ausbildungsform der Erfindung ist der Soll-Bremskraftverlauf zeitlich weitgehend konstant. Dadurch ist es besonders einfach, beispielsweise gesetzliche Regularien einzuhalten. Insbesondere wenn man eine ideale Haftwertausnutzung, also eine schlupffreie Bewegung der Räder über die Schiene annimmt, resultiert dies auch in einer zeitlich konstanten Bremsbeschleunigung bzw. Bremsverzögerung des Zuges bzw. des Schienenfahrzeuges.

Die Erfindung sieht vor, dass der Bremsparameterverlauf einer Kombination von Prüfstandsparametern zugeordnet ist. Der Vorteil ist hier darin zu sehen, dass durch die Zuordnung die Auswahl eines Bremsparameterverlaufs durch Angabe von, dem jeweiligen Verlauf zugeordneten, Prüfstandparametern ermöglicht wird. Beispielsweise kann diese Zuordnung in Versuchen an einem Prüfstand oder durch numerische Simulationen erstellt worden sein.

Erfindungsgemäß ist der Bremsparameterverlauf als Eintrag in einer n-dimensionalen Prüfstandmatrix hinterlegt, wobei jeder Eintrag der Prüfstandmatrix aus einem Bremsparameterverlauf besteht, und jeder Eintrag einer Kombination n Prüfstandsparametern zugeordnet ist. Somit können während der Fahrt beispielsweise die Parameter, die im Prüfstand verwendet wurden, die den aktuellen, also während der Fahrt vorhandenen, Parametern am nächsten kommen, gewählt werden, um somit einen passenden Eintrag aus der Prüfstandmatrix auszuwählen. Anhand dieses Eintrages, der in einem Bremsparameterverlauf besteht, welcher beispielsweise die Normalkraft oder den Bremswert beinhaltet, kann dann eine entsprechende Modulation der Normalkraft veranlasst werden, durch die der gewünschte Soll-Bremskraftverlauf erzeugt wird. Eine jede Dimension dieser Prüfstandmatrix kann sich dabei auf eine diskrete Abstufung eines kontinuierlichen Wertes, wie beispielsweise einer Anfangsgeschwindigkeit, beziehen, oder auch auf wenige, diskrete Parameter, wie beispielsweise auf das Material des Bremsbelages oder das Material der Bremsscheibe.

Eine vorteilhafte Weiterbildung der Erfindung sieht vor, dass die Recheneinheit zur Modulation der Normalkraft zwischen den Einträgen der Matrix interpoliert und/oder darüber hinaus extrapoliert. Somit ist es möglich, dass, wenn ein Bremsparameterverlauf für eine Kombination von Parametern gewählt werden soll, die exakt so nicht explizit in der Prüfstandmatrix hinterlegt wurden, durch Interpolation dennoch ein im Sinne der Erfindung brauchbarer Bremsparameterverlauf errechnet werden kann. Eine Verbesserung der Erfindung schließt mit ein, dass der Bremsverlauf als Funktion von Prüfstandparametern errechenbar ist. Dabei kann eine elektronisch hinterlegte Funktion die Prüfstandparameter als Argumente annehmen und als Rechenergebnis einen Bremsverlauf liefern, beispielsweise über eine in der Funktion implementierte Interpolation.

Vorteilhafterweise sind die Prüfstandparameter in einer Prüfstandparametergruppe enthalten, der unter anderem die Anfangsgeschwindigkeit des Schienenfahrzeugs, die Endgeschwindigkeit des Schienenfahrzeugs, die anfängliche Umdrehungsgeschwindigkeit des Rades, der Durchmesser des Rades, der Wirkdurchmesser der Bremsscheibe, die Normalkraft, das Bremsscheibenmaterial, das Bremsbelagmaterial, die Masse des Schienenfahrzeugs, die anfängliche kinetische Energie des Schienenfahrzeugs, der anfängliche Impuls des Schienenfahrzeugs, die anfängliche Temperatur des Bremsbelags, die anfängliche Temperatur der Bremsscheibe, die Umgebungstemperatur des Rades, die Dauer des Bremsvorgangs und der Zeitpunkt sowie die Dauer mindestens der letzten Bremsung, und fallweise weitere relevante Parameter zugeordnet sind. Der Wirkdurchmesser entspricht dabei dem doppelten Abstand von der Welle oder Achse des Rades, in dem der Bremsbelag effektiv mit der Bremsscheibe zusammenwirkt.

Alle diese Parameter lassen sich in einem Prüfstand vermessen und sind relevant für die Form des Reibwertverlaufes bzw. des dadurch erforderten Normalkraftverlaufes. Insbesondere die anfängliche Temperatur des Bremsbelages und die anfängliche Temperatur der Bremsscheibe lassen sich zwar ohne zusätzliche Sensorik nicht im Zusammenhang mit der erfindungsgemäßen Bremseinrichtung messen, jedoch kann beispielsweise die bekannte Umgebungstemperatur als Anfangstemperatur für Bremsscheibe und Bremsbelag gewählt werden. Durch Kenntnis der vorangegangenen Bremsungen lässt sich zusätzlich die aktuelle Temperatur abschätzen.

Eine weitere Verbesserung der Erfindung sieht vor, dass die Recheneinheit die Temperatur der Bremsscheibe und/oder des Bremsbelages errechnet. Eine solche Berechnung würde anhand eines Temperaturmodells, welches Materialeigenschaften und strukturelle Eigenschaften insbesondere der Bremsscheibe berücksichtigt, durchgeführt. Somit lässt sich beispielsweise durch Kenntnis der Umgebungstemperatur und der bisher durchgeführten Bremsungen eine Temperatur von Bremsscheibe und/oder Bremsbelag errechnen, um beispielsweise einen möglichst passenden Eintrag aus der Prüfstandmatrix auswählen zu können.

Ein Verfahren zur Erzeugung mindestens eines Reibwertverlaufes zur Hinterlegung desselben in der Steuereinheit, also sozusagen zu deren Programmierung, sieht vor, dass in einem Schwungmassenprüfstand der Reibwertverlauf einer Bremsscheibe und eines Bremsbelages bei konstanter Normalkraft des Bremsbelages auf der Bremsscheibe gemessen wird. Indem diese Messung für verschiedene Prüfungsparameter wie beispielsweise die Anfangs- und Endgeschwindigkeit des Zuges, dessen Masse, die Umdrehungsgeschwindigkeit der Räder, das Material des Bremsbelages und der Bremsscheibe, durchgeführt wird, lässt sich eine Prüfstandmatrix erstellen, die erfindungsgemäß im Betrieb Messungen beispielsweise der Temperatur oder der Bremskraft überflüssig macht.

Ein den Betrieb der Bremseinrichtung betreffendes Verfahren sieht vor, dass die Normalkraft des Bremsbelags auf der Bremsscheibe gemäß einem Bremsparameterverlauf zeitlich moduliert wird, welcher anhand momentaner Parameter aus einer Prüfstandmatrix ausgewählt wird. Hierdurch wird dann idealerweise ein Soll-Bremskraftverlauf erzeugt, insbesondere ein zeitlich konstanter Bremskraftverlauf.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigen
Figur 1 ein Schema einer erfindungsgemäßen Bremseinrichtung,
Figur 2 ein Blockschaltbild eines erfindungsgemäßen Verfahrens zum Betrieb der Bremseinrichtung, und
Figur 3 Graphen zur Auswertung des Betriebes der Bremseinrichtung.

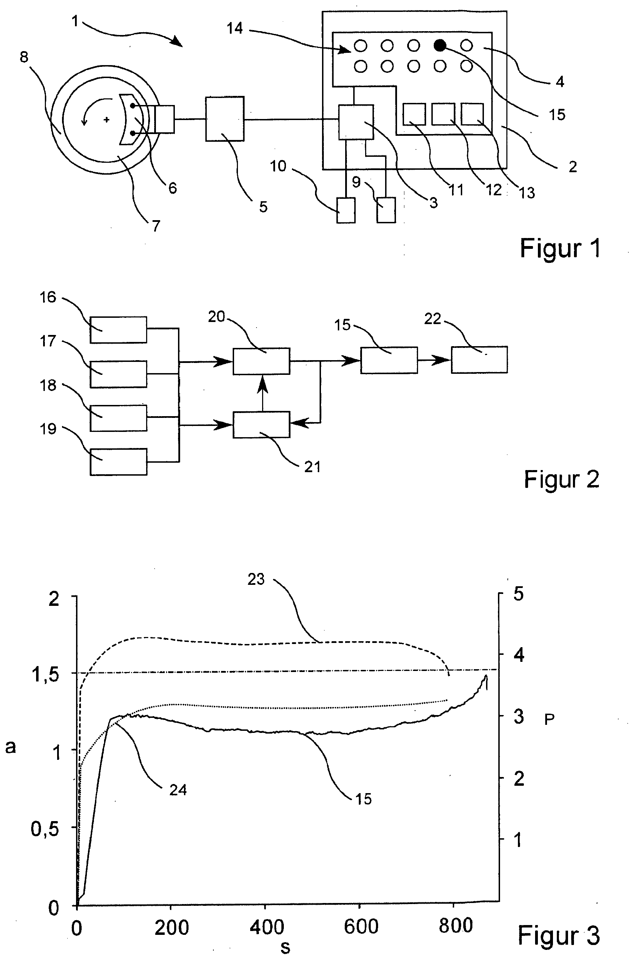

Gemäß Figur 1 umfasst ein hier nicht weiter dargestelltes Schienenfahrzeug eine Bremseinrichtung 1, die wiederum eine Steuereinheit 2 umfasst, die wiederum eine Recheneinheit 3 und eine Speichereinheit 4 beinhaltet, wobei die Bremseinrichtung 1 ferner einen Bremsaktuator 5 mit einem damit zusammenwirkendem Bremsbelag 6 umfasst, der auf die Bremsscheibe 7 eines Rades 8 normal anpressbar ist. Nicht dargestellt sind weitere optionale Bremsaktuatoren, Bremsbeläge und Bremsscheiben, die beispielsweise mit weiteren optionalen Rädern zusammenwirken können.

Die Recheneinheit kommuniziert ferner mit einem Geschwindigkeitsensor 9 und einem Temperatursensor 10, die die Fahrtgeschwindigkeit des Zuges und die Umgebungstemperatur in der Nähe der Bremseinrichtung 1 aufzeichnen. Zusammen mit in der Speichereinheit 4 gespeicherten Informationen über die Zugmasse 11 beziehungsweise über die anteilig auf die Bremseinrichtung 1 bezogene Masse, das Bremsbelagmaterial 12, und das Bremsscheibenmaterial 13 ist die Recheneinheit somit in der Lage, aus einer in der Speichereinheit 4 hinterlegten Prüfstandmatrix 14 einen Reibwertverlauf 15 abzufragen, der zuvor in einem Prüfstand gemessen wurde, bei dem unter ähnlichen oder identischen Parametern mit einer konstanten Normalkraft eines Bremsbelages 6 auf einer Bremsscheibe 7 abgebremst wurde.

Durch Kenntnis dieses Reibwertverlaufes 15 kann die Normalkraft nun zeitlich moduliert werden, so dass ein zeitlich konstanter Bremskraftverlauf erzeugt wird. Insbesondere verfügt diese Bremseinrichtung nicht über einen Bremskraftsensor oder über eine Messeinrichtung zur Erfassung des Reibwertes.

Figur 2 stellt dieses Verfahren in einem Blockschaltbild dar. Als Eingangswert für die Berechnung bzw. die Abfrage oder Interpolation des Reibwertverlaufes 15 dienen die zu Beginn des Bremsvorgangs vorliegende Normalkraft 16, die Geschwindigkeit 17 der Bremsscheibe 7, die Umgebungstemperatur 18, und die kinetische Energie 19 des Zuges. In einem Schätzer-Modul 20 wird ein entsprechender Reibwertverlauf 15 abgefragt bzw. beispielsweise aus einer hier nicht dargestellten Prüfstandsmatrix 14 interpoliert oder extrapoliert, der bei entsprechenden Parametern in einem Schwungmasseprüfstand gemessen wurde. Dieser Reibwertverlauf 15, also der zeitabhängige Reibwert, wird ferner einem Temperaturmodul 21 übergeben, welches anhand dessen die Temperatur insbesondere der Bremsscheibe 7 errechnet. Diese wird wiederum optional an das Schätzer-Modul 20 übergeben, zu einer genaueren Bestimmung des Reibwertverlaufs 15, was eine zuverlässigere Kompensation von dessen Schwankungen erlaubt. Aus dem errechneten Reibwertverlauf 15 lässt sich dann der ideale Normalkraftverlauf 22 bestimmen, der aufzuwenden ist, um eine möglichst konstante Bremskraft zu erhalten. Beispielsweise gleicht dabei eine steigende Normalkraft einen sinkenden Reibwert aus.

In Figur 3 sind drei Graphen aufgezeichnet, die die Funktionsweise einer erfindungsgemäßen Bremseinrichtung 1 im Verlauf einer Bremsung über eine auf der horizontalen Achse aufgetragenen Distanz s, gemessen in Metern, verdeutlichen.

Zum einen ist der Reibwertverlauf 15 bei konstanter Normalkraft, wie er beispielsweise im Stand der Technik auftreten würde oder wie er in einem Schwungmassenprüfstand gemessen werden würde, aufgetragen. Der Betrag des Reibwertverlaufs 15 entspricht dabei einem Zehntel des auf der rechten Achse aufgetragenen Wertes. Erkennbar ist beispielsweise, wie der Reibwertverlauf 15 anfangs aufgrund unter anderem von Erwärmung absinkt, und dann gegen Ende des Bremsvorganges, hauptsächlich verursacht durch die Verlangsamung des Schienenfahrzeugs, stark ansteigt. Diese Steigerung des Reibwertes gegen Ende des Bremsvorgangs ist typischerweise auch akustisch wahrnehmbar.

Ein erfindungsgemäß kompensierter Bremsdruckverlauf 23, aufgetragen gegen die rechte Achse, die einen Druck P in bar angibt, bzw. ein entsprechender erfindungsgemäß kompensierter hier nicht dargestellter Normalkraftverlauf 22, sinkt daher gegen Ende des Bremsvorganges ab, um den Anstieg des Reibwertverlaufs 15 auszugleichen. Infolgedessen ist die Bremsverzögerung bzw. die Beschleunigung 24 des Schienenfahrzeuges, aufgetragen gegen die linke Achse, die eine Beschleunigung a in m/s^2 angibt, über die gesamte Bremsdauer bzw. die gesamte Bremsstrecke nahezu konstant.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind.

So ist es beispielsweise auch möglich, dass die Bremsparameterverläufe nicht in Form von Kurven mit einer Anzahl von Stützstellen, sondern in Form von analytischen Funktionen hinterlegt sind, beispielsweise in Form von Fourierreihen oder Taylorreihen. Auch können die Bremswertverläufe anders als in einer Matrix hinterlegt sein, beispielsweise in einer Funktion, so dass ein Bremswertverlauf aus einer Kombination von Prüfstandparametern errechnet werden kann.

Auch kann der Bremsaktuator beispielsweise pneumatisch, elektromechanisch oder hydraulisch wirken, und die Bremsscheibe kann statt auf dem Rad beispielsweise auf einer Achse oder einer Radsatzwelle des Rades angebracht sein.

### Bezugszeichenliste

1 Bremseinrichtung
2 Steuereinheit
3 Recheneinheit
4 Speichereinheit
5 Bremsaktuator
6 Bremsbelag
7 Bremsscheibe
8 Rad
9 Geschwindigkeitssensor
10 Temperatur
11 Zugmasse
12 Bremsbelagmaterial
13 Bremsscheibenmaterial
14 Prüfstandmatrix
15 Reibwertverlauf
16 Normalkraft
17 Geschwindigkeit
18 Umgebungstemperatur
19 kinetische Energie
20 Schätzer-Modul
21 Temperaturmodul
22 Normalkraftverlauf
23 Bremsdruckverlauf
24 Beschleunigung

## Patentansprüche

1. Bremseinrichtung (1) für ein Schienenfahrzeug, umfassend einen Bremsaktuator (5) und einen dadurch bewegbaren Bremsbelag (6) sowie eine damit zusammenwirkende Bremsscheibe (7), die drehfest mit einem Rad (8) verbunden ist, zur Erzeugung einer das Schienenfahrzeug verlangsamenden Bremskraft auf eine Bremsanforderung einer elektronischen Steuereinheit (2) hin, wobei die Bremskraft in Abhängigkeit von der, durch Anpressen des Bremsbelags (6) auf die Bremsscheibe (7) erzeugten, Normalkraft (16) und von einem, von Relativgeschwindigkeit (17), Material (12; 13) und Temperatur des Bremsbelags und der Bremsscheibe abhängigen, Reibwert entsteht, in der Steuereinheit (2) mindestens ein Bremsparameterverlauf hinterlegt ist, der auf einem Reibwertverlauf (15) basiert, der bei einer Abbremsung von einer Ausgangsgeschwindigkeit auf eine Zielgeschwindigkeit bei konstanter Normalkraft (16) und einer Kombination von Prüfstandparametern (14) entsteht, und dass die Steuereinheit (2) über eine Recheneinheit (3) verfügt, welche auf eine Bremsanforderung hin den einen Normalkraftverlauf (22) gemäß dem mindestens einen Bremsparameterverlauf zeitlich moduliert, um einen Soll-Bremskraftverlauf zu erzeugen,
**dadurch gekennzeichnet, dass** der Bremsparameterverlauf einer Kombination von Prüfstandsparametern zugeordnet ist, wobei der Bremsparameterverlauf als Eintrag in einer n-dimensionalen Prüfstandsmatrix (14) hinterlegt ist, und wobei jeder Eintrag der Prüfstandsmatrix aus einem Bremsparameterverlauf besteht, und jeder Eintrag einer Kombination von n Prüfstandsparametern zugeordnet ist.

2. Bremseinrichtung (1) nach Anspruch 1,
**dadurch gekennzeichnet, dass** der auf dem Reibwertverlauf (15) basierende Bremsparameterverlauf dem Normalkraftverlauf (22) entspricht, welcher den Soll-Bremskraftverlauf erzeugt.

3. Bremseinrichtung (1) nach einem der vorherigen Ansprüche,
**dadurch gekennzeichnet, dass** der auf dem Reibwertverlauf (15) basierende Bremsparameterverlauf diesem Reibwertverlauf (15) entspricht.

4. Bremseinrichtung (1) nach einem der vorherigen Ansprüche,
**dadurch gekennzeichnet, dass** der Soll-Bremskraftverlauf zeitlich konstant ist.

5. Bremseinrichtung (1) nach einem der vorherigen Ansprüche,
**dadurch gekennzeichnet, dass** die Recheneinheit (3) zur Modulation des Normalkraftverlaufs (22) zwischen Einträgen der Matrix interpoliert und / oder darüber hinaus extrapoliert.

6. Bremseinrichtung (1) nach einem der vorherigen Ansprüche, **dadurch gekennzeichnet, dass** der Bremsverlauf als Funktion von Prüfstandparametern errechenbar ist.

7. Bremseinrichtung (1) nach einem der vorherigen Ansprüche,
**dadurch gekennzeichnet, dass** die Prüfstandparameter in einer Prüfstandparametergruppe enthalten sind, der die Anfangsgeschwindigkeit des Schienenfahrzeugs, die Endgeschwindigkeit des Schienenfahrzeugs, die anfängliche Umdrehungsgeschwindigkeit des Rades (8), der Durchmesser des Rades (8), der Wirkdurchmesser der Bremsscheibe (7), die Normalkraft (16), das Bremsscheibenmaterial (13), das Bremsbelagmaterial (12), die Masse (11) des Schienenfahrzeugs, die anfängliche kinetische Energie (19) des Schienenfahrzeugs, der anfängliche Impuls des Schienenfahrzeugs, die anfängliche Temperatur des Bremsbelags (6), die anfängliche Temperatur der Bremsscheibe (7), die Umgebungstemperatur (18) im Bereich der Bremseinrichtung (1), die Dauer des Bremsvorgangs und der Zeitpunkt sowie die Dauer mindestens der letzten Bremsung zugeordnet sind.

8. Bremseinrichtung (1) nach einem der vorherigen Ansprüche,
**dadurch gekennzeichnet, dass** die Recheneinheit mit Hilfe eines Temperaturmoduls (21) die Temperatur der Bremsscheibe (7) mittels eines Temperaturmodells errechnet.

9. Verfahren zur Ermittlung mindestens eines Reibwertverlaufes (15) zur Hinterlegung desselben in einer Speichereinheit (4) einer Steuereinheit (2) einer Bremseinrichtung (1) nach einem der Ansprüche 1 bis 8, wobei der Reibwertverlauf (15) einer Bremsscheibe (7) und eines Bremsbelags (6) bei konstanter Normalkraft (16) bei mindestens einer Abbremsung auf einer fahrzeugsimulierenden Prüfeinrichtung gemessen wird.

10. Verfahren zum Betrieb einer Bremseinrichtung (1) nach einem der Ansprüche 1 bis 8, wobei auf eine Bremsanforderung hin ein Bremsparameterverlauf aus einer Prüfstandmatrix (14) ermittelt wird, und der Normalkraftverlauf (22) des Bremsbelags (6) auf der Bremsscheibe (7) gemäß dem Bremsparameterverlauf zeitlich moduliert wird, wodurch ein Soll-Bremskraftverlauf erzeugt wird.

## Claims

1. Braking device (1) for a rail vehicle, comprising a brake actuator (5) and a brake pad (6) movable thereby as well as a brake disc (7), which is interacting therewith and non-rotatably joined a wheel (8) for generating a braking force decelerating the rail vehicle in response to a braking request of an electronic control unit (2), wherein the braking force arises as a function of the normal force (16) generated by pressing the brake pad (6) against the brake disc (7) and of a friction value depending on relative speed (17), material (12; 13) and temperature of the brake pad and the brake disc, wherein in the control unit (2) there is stored at least one braking parameter curve based on a friction value curve (15) arising at a braking process from a starting speed to a target speed at a constant normal force (16) and a combination of test bed parameters (14), and wherein the control unit (2) has a calculating unit (3), which chronologically modulates in response to a braking request the normal force curve (22) according to the at least one braking parameter curve in order to generate a target braking force curve,
**characterised in that** the braking parameter curve is assigned to a combination of test bed parameters, wherein the braking parameter curve is stored as an entry in an n-dimensional test bed matrix (14) and wherein each entry of the test bed matrix consists of a braking parameter curve and each entry is assigned to a combination of test bed parameters.

2. Braking device (1) according to claim 1,
**characterised in that** the braking parameter curve based on the friction value (15) corresponds to the normal force curve (22) generating the target braking force curve.

3. Braking device (1) according to an of the preceding claims,
**characterised in that** the braking parameter curve based on the friction value (15) corresponds to said friction value curve (15)

4. Braking device (1) according to an of the preceding claims,
**characterised in that** the target braking force curve is constant in time.

5. Braking device (1) according to an of the preceding claims,
**characterised in that** the calculating unit (3) interpolates between entries of the matrix and / or extrapolates beyond for modulating the normal force curve (22).

6. Braking device (1) according to an of the preceding claims,
**characterised in that** the braking curve can be calculated as a function of test bed parameters.

7. Braking device (1) according to an of the preceding claims,
**characterised in that** the test bed parameters are contained in a test bed parameter curve to which are assigned the initial speed of the rail vehicle, the final speed of the rail vehicle, the initial rotational speed of the wheel (8), the diameter of the wheel (8), the effective diameter of the brake disc (7), the normal force (16), the brake disc material (13), the brake pad material (12), the mass (11) of the rail vehicle, the initial kinetic energy (19) of the rail vehicle, the initial inputs of the rail vehicle, the initial temperature of the brake pad (6), the initial temperature of the brake disc (7), the ambient temperature (18) in the region of the braking device (1), the duration of the braking process and the time and duration of at least the last braking operation.

8. Braking device (1) according to an of the preceding claims,
**characterised in that** the calculating unit calculates with the aid of a temperature module (21) the temperature of the brake disc (7) by means of a temperature model.

9. Method for determining at least one friction value curve (15) for storing the same in a memory unit (4) of a control unit (2) of a braking device (1) according to any of claims 1 to 8, wherein the friction value curve (15) of a brake disc (7) and a brake pad (6) is measured at constant normal force (16) at least one deceleration on a vehicle-simulating testing device.

10. Method for operating a braking device (1) according to any of claims 1 to 8, wherein a braking parameter curve is determined from a test bed matrix (14) in response to a braking request and the normal force curve (22) of the brake pad (6) on the brake disc (7) is chronologically modulated in accordance with the braking parameter curve, whereby a target braking force curve is generated.

## Revendications

1. Dispositif (1) de freinage d'un véhicule ferroviaire, comprenant un actionneur (5) de frein et une garniture (6) de frein, ainsi qu'un disque (7) de frein coopérant avec elle, qui est solidaire en rotation d'une roue (8), pour la production d'une force de freinage ralentissant le véhicule ferroviaire, sur une demande de freinage d'une unité (2) électronique de commande, dans lequel la force de freinage se crée en fonction de la force (16) normale, produite par application de la garniture (6) de frein au disque (7) de frein, et d'un coefficient de frottement, qui dépend de la vitesse (17) relative, du matériau (12 ; 13) et de la température de la garniture de frein et du disque de frein, au moins une courbe de paramètre de freinage étant mise en mémoire dans l'unité (2) de commande, paramètre, courbe qui repose sur une courbe (15) du coefficient de frottement, qui se crée lors d'un freinage d'une vitesse initiale à une vitesse cible à force (16) normale constante et à partir d'une combinaison de paramètres (14) de banc d'essai, et en ce que l'unité (2) de commande dispose d'une unité (3) informatique, qui, sur une demande de freinage module dans le temps la courbe (22) de force normale suivant la au moins une courbe de paramètre de freinage, afin de produire une courbe de force de freinage de consigne
**caractérisé en ce que** la courbe de paramètre de freinage est associée à une combinaison de paramètres de banc d'essai, la courbe de paramètre de freinage étant mise en mémoire sous forme d'entrée, dans une matrice (14) de banc d'essai à n dimensions, et dans lequel chaque entrée de la matrice de banc d'essai est constituée d'une courbe de paramètre de freinage et chaque entrée est associée à une combinaison de n paramètres de banc d'essai.

2. Dispositif (1) de freinage suivant la revendication 1, **caractérisé en ce que** la courbe de paramètre de freinage, reposant sur la courbe (15) de coefficient de frottement, correspond à la courbe (22) de force normale, qui produit la courbe de force de freinage de consigne.

3. Dispositif (1) suivant l'une des revendications précédentes, **caractérisé en ce que** la courbe de paramètre de freinage, reposant sur la courbe (15) de coefficient de frottement, correspond à cette courbe (15) de coefficient de frottement.

4. Dispositif (1) suivant l'une des revendications précédentes, **caractérisé en ce que** la courbe de force de freinage de consigne est constante dans le temps.

5. Dispositif (1) suivant l'une des revendications précédentes, **caractérisé en ce que** l'unité (3) informatique interpole entre des entrées de la matrice et/ou extrapole au-delà pour la modulation de la courbe (22) de force normale.

6. Dispositif (1) suivant l'une des revendications précédentes **caractérisé en ce que** la courbe de freinage peut être calculée en fonction de paramètres de banc d'essai.

7. Dispositif (1) suivant l'une des revendications précédentes, **caractérisé en ce que** les paramètres de banc d'essai sont regroupés dans un groupe de paramètres de banc d'essai, auquel sont associés la vitesse initiale du véhicule ferroviaire, la vitesse finale du véhicule ferroviaire, la vitesse initiale de rotation de la roue (8), le diamètre de la roue (8), le diamètre actif du disque (7) de frein, la force (16) normale, le matériau (13) du disque de frein, le matériau (12) de la garniture de frein, la masse (11) du véhicule ferroviaire, l'énergie (19) cinétique initiale du véhicule ferroviaire, la quantité de mouvement initiale du véhicule ferroviaire, la température initiale de la garniture (6) de frein, la température initiale du disque (7) de frein, la température (8) ambiante dans la région du dispositif (1) de freinage, la durée de l'opération de freinage et l'instant ainsi que la durée d'au moins le dernier freinage.

8. Dispositif (1) suivant l'une des revendications précédentes, **caractérisé en ce que** l'unité informatique calcule, au moyen d'un module (21) de température, la température du disque (7) de frein au moyen d'un modèle de température.

9. Procédé de détermination d'au moins une courbe (15) de coefficient de frottement à mettre en mémoire dans une unité (4) de mémoire d'une unité (2) de commande d'un dispositif (1) de freinage, suivant l'une des revendications 1 à 8, la courbe (15) de coefficient de frottement d'un disque (7) de frein et d'une garniture (6) de frein étant, à force (16) normale constante, mesurée lors d'au moins un freinage sur un dispositif de contrôle simulant un véhicule.

10. Procédé pour faire fonctionner un dispositif (1) de freinage suivant l'une des revendications 1 à 8, dans lequel on détermine, sur une demande de freinage, une courbe de paramètre de freinage à partir d'une matrice (14) de banc d'essai et on module dans le temps la courbe (22) de force normale de la garniture (6) de frein sur le disque (7) de frein suivant la courbe de paramètre de freinage, grâce à quoi on produit une courbe de force de freinage de consigne.
